# FASCICULE DE BREVET EUROPEEN

(11) **EP 2 579 108 B1**
(45) Date de publication et mention de la délivrance du brevet: **14.05.2014**
(21) Numéro de dépôt: 11183803.3
(22) Date de dépôt: 04.10.2011
(51) Int. Cl.: B29C 45/00, B29C 45/04, B29C 45/14, G04B 45/00, G04D 1/00

(54) **Procédé de réalisation et de décoration d'un composant transparent d'horlogerie**
Verfahren zur Herstellung und Gestaltung einer durchsichtigen Uhrenkomponente
Method for manufacturing and decorating a transparent clock component

(43) Date de publication de la demande: 10.04.2013
(73) Titulaire: ETA SA Manufacture Horlogère Suisse, 2540 Grenchen (CH)
(72) Inventeur: Poffet, Christian, 1735 Giffers (CH); Gaechter, Philipp, 4452 Itingen (CH)
(74) Mandataire: Giraud, Eric

(56) Documents cités:
- JP-A- 1 114 405
- JP-A- 59 052 626
- JP-A- 63 135 214
- US-A1- 2010 310 697

## Description

### Domaine de l'invention

L'invention concerne un procédé de formage d'un composant d'horlogerie transparent, monobloc comportant une surface supérieure et une surface inférieure reliées par un bord, ledit bord s'étendant selon l'épaisseur dudit composant.

### Arrière-plan de l'invention

La substitution de composants transparents d'origine minérale par des composants transparents en matière plastique moulés permet de disposer d'une alternative fonctionnelle à bas coût de production, et toute indépendance de certaines sources d'approvisionnement de matériaux transparents de haut de gamme.

Toutefois, les pièces transparentes moulées sont, d'une part relativement épaisses car il est délicat de mouler des pièces très fines dans une qualité convenable et reproductible. D'autre part, la résistance à l'usure, et particulièrement aux rayures, de ces composants en plastique connus, est très médiocre. Leur utilisation pour des composants d'habillage d'une pièce d'horlogerie, carrure, lunette, ou glace, est donc limitée dans le temps.

Cette faible résistance à l'usure empêche, encore, de réaliser des composants avec des angles vifs, qui s'émousseraient trop vite dans le temps au contact de l'utilisateur, de ses vêtements, et des objets de son cadre de vie habituel.

Il est utile, en horlogerie, de disposer de composants de haute dureté superficielle, en particulier pour ces composants d'habillage externe, soumis aux contraintes de l'environnement et de l'utilisateur. De tels composants doivent, encore, posséder certaines propriétés physiques d'élasticité, de rigidité ou au contraire de souplesse, ou encore des propriétés optiques particulières, pour la mise en valeur de certains affichages ou composants, ou au contraire pour cacher certains organes de la pièce d'horlogerie.

Le document JP 59 052626 A au nom de SUMITOMO décrit la fabrication d'un boîtier isolant, où un corps est d'abord moulé par injection en résine synthétique sur un outillage rotatif dans une première position, puis est soumis à une pulvérisation métallique par plasma dans une deuxième position de cet outillage, et enfin subit une nouvelle injection de résine par-dessus la couche métallique, du côté opposé au corps de base, et ceci dans une troisième position de l'outillage rotatif, opposée par rapport à la première.

Le document JP 1 114405 A au nom de TIGERS POLYMER décrit un système similaire, où le métal est sous forme de film maintenu par adhésif entre deux couches de résine, la séquence étant faite sur un outillage rotatif similaire.

Le document US 2010 / 310 697 A1 au nom de STEINEBRUNNER décrit une machine de moulage par injection pour la réalisation d'une pièce en deux demi-coquilles en polymère injecté, qui sont assemblées l'une à l'autre sur la même machine. Celle-ci comporte un outil d'injection rotatif dans deux sens de pivotement opposés.

### Résumé de l'invention

L'invention se propose de mettre en oeuvre un procédé permettant l'obtention économique, avec une haute précision dimensionnelle, de composants d'horlogerie transparents et monobloc.

Tout particulièrement, l'invention a pour but de réaliser un tel composant, avec une dureté superficielle supérieure à celle des composants d'horlogerie usuellement obtenus par moulage de matériaux plastiques.

Un but particulier est encore de réaliser des composants externes à une pièce d'horlogerie, comportant des angles vifs, par exemple avec une taille à facettes ou une taille diamant, et résistants à l'usure.

A cet effet, l'invention concerne un procédé de réalisation et de décoration d'un composant transparent d'horlogerie, et d'apposition de décors de part et d'autre dudit composant, au niveau de surfaces supérieure et inférieure creuse séparées par l'épaisseur dudit composant, caractérisé en ce que, dans cet ordre:
- sur un premier poste, on dépose un premier décor sur un modèle mâle;
- on amène sur un deuxième poste, dans une chambre d'injection complémentaire à ladite surface supérieure, ou bien ledit modèle mâle muni dudit premier décor, ou bien respectivement ledit modèle mâle muni dudit premier décor coiffé par une préforme transparente sur ledit premier poste ou sur un poste intermédiaire entre ledit premier poste et ledit deuxième poste, et on injecte dans la totalité de ladite chambre d'injection un premier matériau transparent et polymérisable, de façon à recouvrir dudit premier matériau, ou bien ledit modèle mâle muni dudit premier décor ou bien respectivement en surmoulage ledit modèle mâle muni dudit premier décor coiffé par ladite préforme, de façon à obtenir un premier composé comportant ladite face supérieure et comportant ledit premier décor sur sa dite face inférieure creuse;
- on laisse se polymériser ledit premier composé dans ladite chambre d'injection;
- on retire ledit premier composé de ladite chambre d'injection ;
- on dépose un troisième matériau ou/et d'un deuxième décor, dans une cavité sur un troisième poste où ledit troisième matériau ou/et deuxième décor est maintenu par gravité;
- on dépose, sur un troisième poste, ledit troisième matériau ou/et deuxième décor sur ladite face supérieure dudit premier composé par un mouvement relatif entre ladite cavité et ledit troisième poste selon la direction de la pesanteur, de façon à obtenir un deuxième composé ;
- on attend, sur ledit troisième poste, que ledit deuxième composé soit manipulable ;
- on retire ledit deuxième composé dudit troisième poste.

Selon une caractéristique de l'invention, on effectue, après le retrait dudit deuxième composé dudit troisième poste, le dépôt, sur un quatrième poste, d'un troisième décor sur ladite face supérieure dudit deuxième composé ou en superposition dudit troisième matériau ou/et deuxième décor.

On peut utiliser comme dit premier matériau le matériau « Cover Form ® » de « Evonik Rôhm ® ».

On peut réaliser ladite préforme dans un premier matériau de préforme constitué par le matériau « Cover Form ® » de « Evonik Röhm ® » ou bien par le matériau PMMA ou polymétacrylate.

Selon une caractéristique de l'invention, on injecte ledit premier matériau dans ladite chambre d'injection au travers d'un réseau capillaire d'injection et de dégazage.

Selon une caractéristique de l'invention, on accompagne la polymérisation dudit premier composé dans ladite chambre d'injection par une chauffe entre 100°C et 120°C pendant 10 à 20 secondes, ou/et par une insolation par rayonnement ultra-violet.

Selon une caractéristique de l'invention, on incorpore audit premier décor des particules électrisables ou aimantables ou électrisées ou aimantées.

Selon une caractéristique de l'invention, on incorpore audit troisième matériau ou/et audit deuxième décor des particules électrisables ou aimantables ou électrisées ou aimantées.

Selon une caractéristique de l'invention, on réalise ledit premier décor ou/et ledit deuxième décor avec des particules électrisables ou aimantables ou électrisées ou aimantées.

Selon une caractéristique de l'invention, on incorpore audit troisième décor des particules électrisables ou aimantables ou électrisées ou aimantées.

### Description sommaire des dessins

D'autres caractéristiques et avantages de l'invention apparaîtront mieux à la lecture de la description détaillée qui va suivre, en référence aux dessins annexés, où :
- la figure 1 représente, de façon schématisée sous forme d'un organigramme, la succession des opérations de mise en oeuvre du procédé;
- la figure 2 représente, de façon schématisée et en coupe selon son épaisseur, un composant obtenu selon le procédé, dans une réalisation où un décor est apposé au niveau de sa face inférieure et un autre décor au niveau sa face supérieure;
- la figure 3 représente, de façon schématisée et en coupe selon son épaisseur, un composant obtenu selon le procédé, dans une réalisation où un décor est apposé au niveau sa face inférieure et plusieurs décors sont apposés, en superposition, au niveau de sa face supérieure;
- la figure 4 représente, de façon schématisée, un poste de production comportant différents postes autour d'un outillage rotatif, correspondant chacun à une étape de mise en oeuvre du procédé selon l'invention;
- la figure 5 représente, sous la forme d'un schéma-blocs, une pièce d'horlogerie comportant au moins un composant réalisé selon l'invention.

### Description détaillée des modes de réalisation préférés

L'invention se propose de mettre en oeuvre un procédé permettant l'obtention économique, avec une haute précision dimensionnelle, de composants 1 d'horlogerie transparents et monobloc, portant des décors ou des inserts sur deux faces opposées.

Tout particulièrement, l'invention a pour but de réaliser un tel composant 1, avec une dureté superficielle supérieure à celle des composants d'horlogerie usuellement obtenus par moulage de matériaux plastiques.

A cet effet, l'invention concerne la mise au point d'un procédé de réalisation et de décoration de surfaces supérieure 2 et inférieure 3 d'un composant horloger 1, séparées par l'épaisseur de ce composant 1, et, de façon particulière et préférée, d'un composant horloger transparent pour un mouvement 100 ou pour une pièce d'horlogerie 1000.

Selon ce procédé, et dans cet ordre, on effectue les étapes suivantes:
- AA : on dépose un premier décor A sur un modèle mâle 9 ;
- BB : on amène dans une chambre d'injection 11 le modèle mâle 9 coiffé ou non par une préforme 6, on y injecte un matériau 13 transparent pour recouvrir le modèle mâle 9 ou la préforme 6, pour obtenir un composé 14 comportant la face supérieure 2, avec le premier décor A, sur la face inférieure 3 de ce composé 14 qui est opposée à cette face supérieure 2, laquelle provient du moulage dans la chambre d'injection 11, ou de la préforme 6, ou du surmoulage de la préforme 6 dans la chambre d'injection 11 ;
- CC : on polymérise le composé 14 dans la chambre d'injection 11, puis on l'en retire;
- DD : on dépose un autre matériau 15 ou/et deuxième décor C, dans une cavité 16 où cet autre matériau 15 ou/et ce deuxième décor C est maintenu par gravité, et on le dépose, sur la face supérieure 2, par un mouvement relatif selon la direction de la pesanteur, de façon à obtenir un deuxième composé 18.

De préférence ce procédé est mis en oeuvre sur un moyen de production multi-postes, sur lequel :
- sur un premier poste 8, on dépose un premier décor A sur un modèle mâle 9 ;
- on amène sur un deuxième poste 10, dans une chambre d'injection 11 complémentaire à la surface supérieure 2, ou bien le modèle mâle 9 muni du premier décor A, ou bien respectivement le modèle mâle 9 muni du premier décor A coiffé par une préforme 6 transparente sur le premier poste 8 ou sur un poste intermédiaire entre le premier poste 8 et le deuxième poste 10, et on injecte dans la totalité de la chambre d'injection 11 un premier matériau 13 transparent et polymérisable, de façon à recouvrir du premier matériau 13, ou bien le modèle mâle 9 muni du premier décor A ou bien respectivement en surmoulage le modèle mâle 9 muni du premier décor A coiffé par la préforme 6, de façon à obtenir un premier composé 14 comportant la face supérieure 2 et comportant le premier décor A sur sa e face inférieure creuse 3 ;
- on laisse se polymériser le premier composé 14 dans la chambre d'injection 11 ;
- on retire le premier composé 14 de la chambre d'injection 11;
- on dépose un troisième matériau 15 ou/et d'un deuxième décor C, dans une cavité 16 sur un troisième poste 17 où le troisième matériau 15 ou/et deuxième décor C est maintenu par gravité;
- on dépose, sur un troisième poste 17, le troisième matériau 15 ou/et deuxième décor C sur la face supérieure 2 du premier composé 14 par un mouvement relatif entre la cavité 16 et le troisième poste 17 selon la direction de la pesanteur, de façon à obtenir un deuxième composé 18;
- on attend, sur le troisième poste 17, que le deuxième composé 18 soit manipulable ;
- on retire le deuxième composé du troisième poste 17.

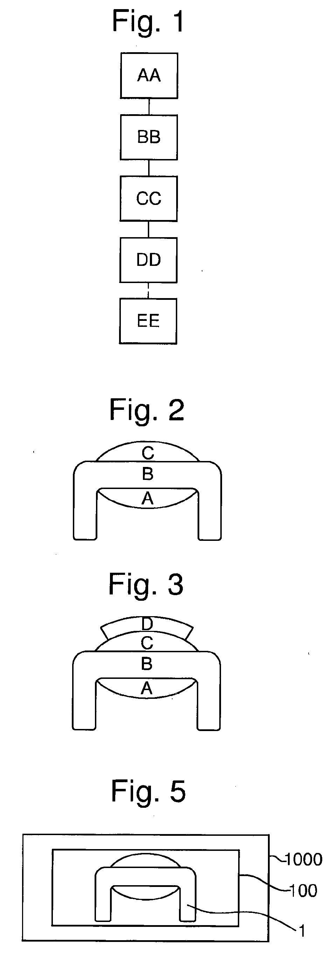

Ce mode opératoire permet l'obtention d'un composant selon la figure 2.

De façon particulière, et permettant de combiner, au voisinage de la face supérieure 2, différentes fonctionnalités techniques ou/et de décor, on effectue, dans une étape EE, après le retrait du deuxième composé 18 du troisième poste 17, le dépôt, sur un quatrième poste 19, d'un troisième décor D sur la face supérieure 2 du deuxième composé 18 ou en superposition du troisième matériau 15 ou/et deuxième décor C. ce troisième décor D peut être amené par un tiroir 21 mobile par rapport à un bâti 22

De façon préférée, et particulièrement avantageuse en raison de ses multiples propriétés physiques de fluidité et de capillarité à l'état fluide, de haute dureté superficielle à l'état polymérisé, et de sa transparence parfaite, on utilise comme premier matériau 13 le matériau « Cover Form ® » de « Evonik Rôhm ® ».

De façon préférée, quand on utilise une préforme 6, on réalise cette préforme 6 dans un premier matériau de préforme 7 constitué par le matériau « Cover Form ® » de « Evonik Röhm ® » ou bien par le matériau PMMA ou polymétacrylate.

Préférentiellement dans le cas où le composant 1 est réalisé, dans la chambre d'injection 11, sans recours à une préforme, et plus particulièrement dans le cas où ce composant 1 est mince, soit avec une épaisseur de quelques centièmes ou dixièmes de millimètre, on injecte avantageusement le premier matériau 13 dans la chambre d'injection 11 au travers d'un réseau capillaire d'injection et de dégazage 12.

De façon avantageuse, on accompagne la polymérisation du premier composé 14 dans la chambre d'injection 11 par une chauffe inférieure à 130°C, de préférence entre 100°C et 120°C pendant 10 à 20 secondes, ou/et par une insolation par rayonnement ultra-violet dit ici UV, de façon à augmenter la dureté superficielle du composant 1. Cette polymérisation naturelle peut s'accompagner d'un chauffage H, ou/et d'une insolation J aux rayons ultra-violets dits ci-après UV, qui ont chacun pour effet d'augmenter la durée superficielle du composant 1 obtenu, en effectuant la réticulation définitive du système. L'insolation apporte un supplément de dureté notable, d'environ 10%, par rapport au même composant polymérisé à l'ambiante, soit polymérisé avec chauffage, et, dans ce dernier cas, d'une dureté superficielle déjà supérieure à celle du même composant polymérisé à l'ambiante.

On comprend qu'il est possible d'effectuer un chauffage complémentaire ou/et une insolation aussi bien quand le premier composé 14 est enfermé dans la cavité de la chambre d'injection11, que quand il en est extrait. La durée d'un cycle d'injection et de polymérisation avec chauffage est brève, de l'ordre de 30 à 40 secondes. Le cycle d'insolation UV a une durée de 10 à 20 secondes.

Dans une réalisation préférée, on fait une chauffe de polymérisation quand le premier composé 14 est encore dans l'outillage, le choix de l'insolation UV en ou hors outillage dépend essentiellement des contraintes de cycle de production : dans un cas les outillages sont immobilisés un peu plus longtemps avant le formage du composant suivant, dans l'autre cas une manipulation annexe est requise, ou bien l'insolation peut être poursuivie sur un des postes suivants, 17 ou 19, de la ligne de production. Dans une variante avantageuse, on réalise un refroidissement à température ambiante au moins aussi brusque que la chauffe, pendant une durée inférieure à 20 secondes.

Si l'invention a pour but préféré la réalisation de composés transparents, elle permet aussi de réaliser des composés avec des inclusions à caractère décoratif, ou technique, par exemple les repères d'affichage de repères horaires, qui peuvent être réalisés dans l'épaisseur d'une glace de montre, ou bien du côté de cette glace tourné vers l'aiguillage ou les moyens d'affichage de la pièce d'horlogerie, ou des repères de plages correspondant à des affichages particuliers, comme la réserve de marche ou similaire. Des inserts particuliers peuvent être incorporés, tels que des marquages anti-contrefaçon, des numéros d'identification de pièce, des capteurs d'énergie ou d'effort, ou similaires.

Avantageusement, quand on réalise un composé multi-couches, on effectue une structuration de fonctionnalisation d'une ou de plusieurs des surfaces intermédiaires entre ces couches.

Une variante particulièrement intéressante d'inclusion à caractère technique pour les composants 1 destinés à faire partie d'un mouvement horloger consiste à ménager des stries, mortaises, poches ou des alvéoles, ou similaire, quand on effectue une structuration de fonctionnalisation mécanique d'une telle surface intermédiaire, de façon à pouvoir y déposer des particules de propriétés particulières avant l'application de la couche supérieure. Les propriétés du matériau « Cover Form ® » à l'état liquide avant sa polymérisation permettent de jouer sur sa capillarité, lorsqu'il est mélangé avec de telles particules, pour les déposer au fond de telles mortaises ou similaire. Un dimensionnement très serré de ces mortaises, stries, alvéoles, poches ou similaires, et voisin de la granulométrie des particules, permet de retenir des particules de faible granulométrie pendant l'injection du produit liquide destiné à former la couche suivante, dans une position parfaitement définie.

Tout particulièrement, le choix de l'insertion de particules électrisées ou électrisables, ou/et aimantées ou aimantables, permet de conférer au composant 1 ainsi réalisé des propriétés physiques particulières d'attraction ou/et de répulsion avec d'autres composants d'un mouvement d'horlogerie, de propriétés complémentaires selon l'effet recherché.

Ainsi, dans une variante avantageuse, on réalise, au cours de l'exécution du procédé selon l'invention, l'intégration de telles particules, soit au voisinage de la face inférieure 3, soit au voisinage de la face supérieure 2. Différentes variantes peuvent être cumulées si nécessaire.

Dans une variante, on incorpore au premier décor A des particules électrisables ou aimantables ou électrisées ou aimantées.

Dans une autre variante, on incorpore au troisième matériau 15 ou/et au deuxième décor C des particules électrisables ou aimantables ou électrisées ou aimantées.

Dans une autre variante, on réalise le premier décor A ou/et le deuxième décor C avec des particules électrisables ou aimantables ou électrisées ou aimantées.

Dans une autre variante, on incorpore au troisième décor D des particules électrisables ou aimantables ou électrisées ou aimantées.

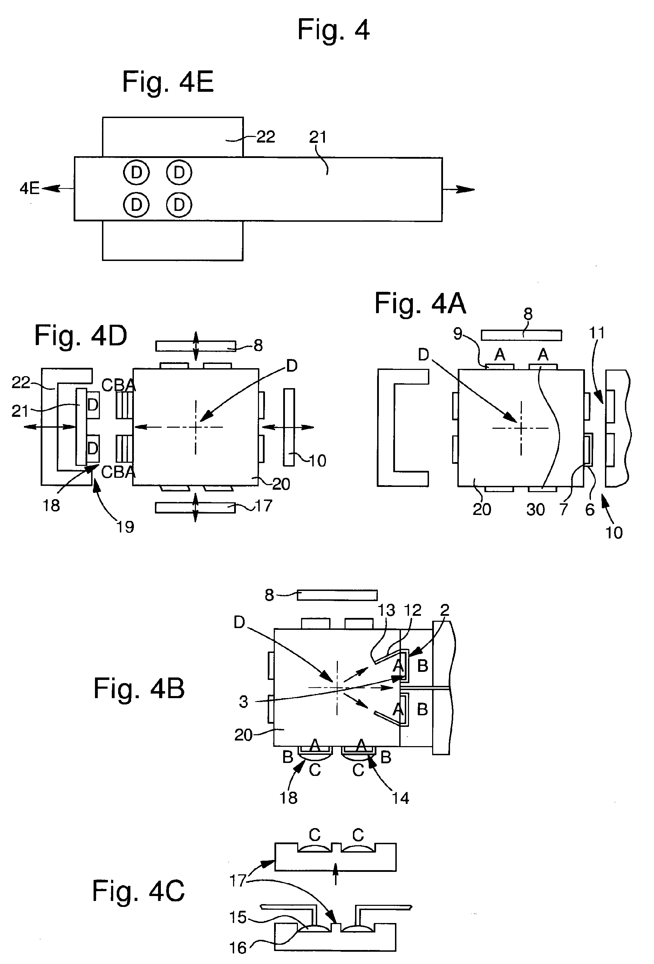

Un exemple d'un poste de prouction convenant à la mise en oeuvre de ce procédé est aussi décrit. Au moins un premier poste 8, au moins un deuxième poste 10, au moins un troisième poste 17, sont répartis en séquence dans cet ordre, autour d'un outillage rotatif 20 portant au moins autant de modèles mâles 9 que de postes, et ces postes périphériques sont chacun mobile autour de cet outillage rotatif 20. Tel que visible sur la figure 4, de préférence l'outillage rotatif 20 pivote autour d'un axe horizontal D, et chacun des postes périphériques 8, 10, 17, 19 est mobile dans un mouvement de va-et-vient paraxial, de façon à dégager les postes périphériques pour autoriser le pivotement de l'outillage rotatif 20 pour le passage des ébauches à l'opération suivante, le retour des postes périphériques sur les faces de l'outillage rotatif 20, ici représenté sous la forme préférée d'un cube, permet ensuite l'élaboration simultanée de chacune des opérations individuelles. Ainsi, après une révolution complète, le composant 1 est terminé. L'enlèvement du composant 1 peut avantageusement être jumelé avec la pose du dernier décor D, et être effectué au niveau du quatrième poste 19. Il peut aussi être effectué par un manipulateur au niveau du premier poste 8, le bras du manipulateur assurant à la fois le dégarnissage du produit terminé de l'outillage primaire 30, et le garnissage de ce même outillage primaire 30 avec un premier décor A ou/et une préforme 6.

Dans une variante du poste de production pour la mise en oeuvre du procédé, des outillages primaires 30, chacun équipé d'au moins un modèle mâle 9, sont répartis autour d'un tel outillage rotatif 20 portant au moins un premier poste 8, au moins un deuxième poste 10, au moins un troisième poste 17, en séquence dans cet ordre, en nombre égal entre eux, le nombre de postes étant inférieur ou égal à celui du nombre des outillages primaires 30.

Un mouvement d'horlogerie 100 comportant au moins un composant 1 transparent d'horlogerie 1, et d'apposition de décors de part et d'autre du composant 1, au niveau de surfaces supérieure 2 et inférieure creuse 3 séparées par l'épaisseur du composant 1, peut être réalisé et décoré selon ce procédé.

Une pièce d'horlogerie 1000 comportant au moins un composant 1 transparent d'horlogerie 1, et d'apposition de décors de part et d'autre du composant 1, au niveau de surfaces supérieure 2 et inferieure creuse 3 séparées par l'épaisseur du composant 1, peut être réalisée et décorée selon ce procédé.

## Revendications

1. Procédé de réalisation et de décoration d'un composant transparent d'horlogerie (1), et d'apposition de décors de part et d'autre dudit composant (1), au niveau de surfaces supérieure (2) et inférieure creuse (3) séparées par l'épaisseur dudit composant (1), **caractérisé en ce que**, dans cet ordre:
- sur un premier poste (8), on dépose un premier décor (A) sur un modèle mâle (9) ;
- on amène sur un deuxième poste (10), dans une chambre d'injection (11) complémentaire à ladite surface supérieure (2), ou bien ledit modèle mâle (9) muni dudit premier décor (A), ou bien respectivement ledit modèle mâle (9) muni dudit premier décor (A) coiffé par une préforme (6) transparente sur ledit premier poste (8) ou sur un poste intermédiaire entre ledit premier poste (8) et ledit deuxième poste (10), et on injecte dans la totalité de ladite chambre d'injection (11) un premier matériau (13) transparent et polymérisable, de façon à recouvrir dudit premier matériau (13), ou bien ledit modèle mâle (9) muni dudit premier décor (A) ou bien respectivement en surmoulage ledit modèle mâle (9) muni dudit premier décor (A) coiffé par ladite préforme (6), de façon à obtenir un premier composé (14) comportant ladite face supérieure (2) et comportant ledit premier décor (A) sur sa dite face inférieure creuse (3) ;
- on laisse se polymériser ledit premier composé (14) dans ladite chambre d'injection (11);
- on retire ledit premier composé (14) de ladite chambre d'injection (11);
- on dépose un troisième matériau (15) ou/et d'un deuxième décor (C), dans une cavité (16) sur un troisième poste (17) où ledit troisième matériau (15) ou/et deuxième décor (C) est maintenu par gravité;
- on dépose, sur un troisième poste (17), ledit troisième matériau (15) ou/et deuxième décor (C) sur ladite face supérieure (2) dudit premier composé (14) par un mouvement relatif entre ladite cavité (16) et ledit troisième poste (17) selon la direction de la pesanteur, de façon à obtenir un deuxième composé (18);
- on attend, sur ledit troisième poste (17), que ledit deuxième composé (18) soit manipulable ;
- on retire ledit deuxième composé dudit troisième poste (17).

2. Procédé selon la revendication 1, **caractérisé en ce qu'**on effectue, après le retrait dudit deuxième composé (18) dudit troisième poste (17), le dépôt, sur un quatrième poste (19), d'un troisième décor (D) sur ladite face supérieure (2) dudit deuxième composé (18) ou en superposition dudit troisième matériau (15) ou/et deuxième décor (C).

3. Procédé selon l'une des revendications précédentes, **caractérisé en ce qu'**on injecte ledit premier matériau (13) dans ladite chambre d'injection (11) au travers d'un réseau capillaire d'injection et de dégazage (12).

4. Procédé selon l'une des revendications précédentes, **caractérisé en ce qu'**on accompagne la polymérisation dudit premier composé (14) dans ladite chambre d'injection (11) par une chauffe entre 100°C et 120°C pendant 10 à 20 secondes, ou/et par une insolation par rayonnement ultra-violet.

5. Procédé selon l'une des revendications précédentes, **caractérisé en ce qu'**on accompagne la polymérisation dudit premier composé (14) après sa sortie de ladite chambre d'injection (11) par une insolation par rayonnement ultra-violet.

6. Procédé selon l'une des revendications précédentes, **caractérisé en ce qu'**on incorpore audit premier décor (A) des particules électrisables ou aimantables ou électrisées ou aimantées.

7. Procédé selon l'une des revendications précédentes, **caractérisé en ce qu'**on incorpore audit troisième matériau (15) ou/et audit deuxième décor (C) des particules électrisables ou aimantables ou électrisées ou aimantées.

8. Procédé selon l'une des revendications précédentes, **caractérisé en ce qu'**on réalise ledit premier décor (A) ou/et ledit deuxième décor (C) avec des particules électrisables ou aimantables ou électrisées ou aimantées.

9. Procédé selon la revendication 2, **caractérisé en ce qu'**on incorpore audit troisième décor (D) des particules électrisables ou aimantables ou électrisées ou aimantées.

## Patentansprüche

1. Verfahren zum Herstellen und Verzieren einer transparenten Uhrenkomponente (1) und zum Hinzufügen von Verzierungen zu beiden Seiten der Komponente (1) auf Höhe einer oberen Oberfläche (2) und einer hohlen unteren Oberfläche (3), die durch die Dicke der Komponente (1) getrennt sind, **dadurch gekennzeichnet, dass** in dieser Reihenfolge:
- an einer ersten Station (8) eine erste Verzierung (A) auf eine Vollform (9) aufgebracht wird;
- entweder die Vollform (9), die mit der ersten Verzierung (A) versehen ist, oder die Vollform (9), die mit der ersten Verzierung (A) versehen ist, auf die in der ersten Station (8) oder in einer Zwischenstation zwischen der ersten Station (8) und einer zweiten Station (10) ein transparenter Vorformling (6) gesetzt worden ist, zu einer zweiten Station (10) in einer zu der oberen Oberfläche (2) komplementären Einspritzkammer (11) geführt wird und in die gesamte Einspritzkammer (11) ein erstes transparentes und polymerisierbare aterial (13) eingespritzt wird, derart, dass entweder die mit der ersten Verzierung (A) versehene Vollform (9) oder durch Umspritzen die mit der ersten Verzierung (A) versehene Voflform (9), auf die der Vorformling (6) gesetzt ist, mit dem ersten Material (13) beschichtet ist, derart, dass ein erster Verbundkörper (14) erhalten wird, der die obere Oberfläche (2) aufweist und die erste Verzierung (A) auf der hohlen unteren Fläche (3) aufweist;
- ein Polymerisieren des ersten Verbundkörpers (14) in der Einspritzkammer (11) zugelassen wird;
- der ersten Verbundkörper (14) aus der Einspritzkammer (11) entnommen wird;
- ein drittes Material (15) und/oder eine zweite Verzierung (C) in einem Hohlraum (16) bei einer dritten Station (17), wo das dritte Material (15) und/oder die zweite Verzierung (C) durch Schwerkraft gehalten werden, aufgebracht wird;
- bei der dritten Station (17) das dritte Material (15) und/oder die zweite Verzierung (C) auf die obere Oberfläche (2) des ersten Verbundkörpers (14) durch eine Relativbewegung zwischen dem Hohlraum (16) und der dritten Station (17) in Richtung der Schwerkraft aufgebracht werden, derart, dass ein zweiter Verbundkörper (18) erhalten wird;
- in der dritten Station (17) gewartet wird, bis der zweite Verbundkörper (18) handhabbar wird;
- der zweite Verbundkörper aus der dritten Station (17) entnommen wird.

2. Verfahren nach Anspruch 1, **dadurch gekennzeichnet, dass** nach dem Entnehmen der zweiten Zusammensetzung (18) aus der dritten Station (17) in einer vierten Station (19) das Ablagern einer dritten Verzierung (D) auf der oberen Oberfläche (2) des zweiten Verbundkörpers (18) oder überlagert auf dem dritten Material (15) und/oder der zweiten Verzierung (C) bewirkt wird.

3. Verfahren nach einem der vorhergehenden Ansprüche, **dadurch gekennzeichnet, dass** das erste Material (13) in die Einspritzkammer (11) durch ein Einspritz- und Entgasungs-Kapillarnetz (12) eingespritzt wird.

4. Verfahren nach einem der vorhergehenden Ansprüche, **dadurch gekennzeichnet, dass** die Polymerisation des ersten Verbundkörpers (14) in der Einspritzkammer (11) von einer Erwärmung von 100 °C und 120 °C während 10 bis 20 Sekunden und/oder von einer Ultraviolettbestrahlung begleitet wird.

5. Verfahren nach einem der vorhergehenden Ansprüche, **dadurch gekennzeichnet, dass** die Polymerisation des ersten Verbundkörpers (14) nach dem Verlassen der Einspritzkammer (11) von einer Ultraviolettbestrahlung begleitet wird.

6. Verfahren nach einem der vorhergehenden Ansprüche, **dadurch gekennzeichnet, dass** in die erste Verzierung (A) elektrisierbare oder magnetisierbare oder elektrisierte oder magnetisierte Partikel aufgenommen werden.

7. Verfahren nach einem der vorhergehenden Ansprüche, **dadurch gekennzeichnet, dass** in das dritte Material (15) und/oder in die zweite Verzierung (C) elektrisierbare oder magnetisierbare oder elektrisierte oder magnetisierte Partikel aufgenommen werden.

8. Verfahren nach einem der vorhergehenden Ansprüche, **dadurch gekennzeichnet, dass** die erste Verzierung (A) und/oder die zweite Verzierung (C) mit elektrisierbaren oder magnetisierbaren oder elektrisierten oder magnetisierten Partikeln hergestellt werden.

9. Verfahren nach Anspruch 2, **dadurch gekennzeichnet, dass** in die dritte Verzierung (D) elektrisierbare oder magnetisierbare oder elektrisierte oder magnetisierte Partikel aufgenommen werden.

## Claims

1. Method for the making and decoration of a transparent timepiece component (1) and for affixing decorations on both sides of said component (1), on a top surface (2) and hollow bottom surface (3) separated by the thickness of said component (1), **characterized in that**, in the following order:
- in a first station (8), a first decoration (A) is deposited on a male pattern (9);
- there is moved into a second station (10), in an injection chamber (11) complementary to said top surface (2), either said male pattern (9) provided with said first decoration (A), or respectively said male pattern (9) provided with said first decoration (A) covered with a transparent preform (6) in said first station (8) or in an intermediate station between said first station (8) and said second station (10), and a first transparent polymerisable material (13) is injected throughout said injection chamber (11), so as to coat with said first material (13), either said male pattern (9) provided with said first decoration (A), or respectively, overmoulding said male pattern (9) provided with said first decoration (A) covered by said preform (6), so as to obtain a first compound (14) including said top face (2) and including said first decoration (A) on said hollow bottom face (3);
- said first compound (14) injected into said injection chamber (11) is allowed to polymerise;
- said first compound (14) is removed from said injection chamber (11);
- a third material (15) and/or a second decoration (C) is deposited in a cavity (16) in a third station (17) where said third material (15) and/or second decoration (C) is held by gravity;
- in a third station (17), said third material (15) and/or second decoration (C) is deposited on said top surface (2) of said first compound (14) by a relative motion between said cavity (16) and said third station (17) in the direction of gravity, so as to obtain a second compound (18);
- in said third station (17), it is waited until said second compound (18) is handleable;
- said second compound is removed from said third station (17).

2. Method according to claim 1, **characterized in that** after the removal of said second compound (18) from said third station (17), in a fourth station (19), a third decoration (D) is deposited on said top face (2) of said second compound (18) or in superposition on said third material (15) and/or second decoration (C).

3. Method according to any of preceding claims, **characterized in that** said first material (13) is injected into said injection chamber (11) through an injection and degassing capillary network (12).

4. Method according to any of preceding claims, **characterized in that** the polymerisation of said first compound (14) is accompanied in said injection chamber (11) by a heat treatment between 100°C and 120°C for 10 to 20 seconds, and/or irradiation by ultraviolet radiation.

5. Method according to any of preceding claims, **characterized in that** the polymerisation of said first compound (14) is accompanied, after removal from said injection chamber (11), by irradiation by ultraviolet radiation.

6. Method according to any of preceding claims, **characterized in that** electrifiable or magnetisable or electrified or magnetised particles are incorporated in said first decoration (A).

7. Method according to any of preceding claims, **characterized in that** electrifiable or magnetisable or electrified or magnetised particles are incorporated in said third material (15) and/or in said second decoration (C).

8. Method according to any of preceding claims, **characterized in that** electrifiable or magnetisable or electrified or magnetised particles are incorporated in said first decoration (A) and/or in said second decoration (C).

9. Method according claim 2, **characterized in that** electrifiable or magnetisable or electrified or magnetised particles are incorporated in said third decoration (D).
